(19) Europäisches Patentamt
European Patent Office
Office européen des brevets

(11) **EP 4 575 908 A1**

(12) **EUROPEAN PATENT APPLICATION**
published in accordance with Art. 153(4) EPC

(43) Date of publication:
**25.06.2025 Bulletin 2025/26**

(21) Application number: **23864416.5**

(22) Date of filing: **27.06.2023**

(51) International Patent Classification (IPC):
**G06N 3/08** (2023.01)

(52) Cooperative Patent Classification (CPC):
**G06F 18/22; G06F 18/23; G06F 18/2415;
G06N 3/04; G06N 3/08**

(86) International application number:
**PCT/CN2023/102730**

(87) International publication number:
**WO 2024/055677 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.09.2022 CN 202211122497**

(71) Applicant: **Huawei Technologies Co., Ltd.
Shenzhen, Guangdong 518129 (CN)**

(72) Inventors:
• **XIAO, An
Shenzhen, Guangdong 518129 (CN)**
• **CHEN, Hanting
Shenzhen, Guangdong 518129 (CN)**
• **GUO, Tianyu
Shenzhen, Guangdong 518129 (CN)**
• **WANG, Yunhe
Shenzhen, Guangdong 518129 (CN)**

(74) Representative: **Goddar, Heinz J. et al
Boehmert & Boehmert
Anwaltspartnerschaft mbB
Pettenkoferstrasse 22
80336 München (DE)**

(54) **DEEP CLUSTERING METHOD, APPARATUS AND SYSTEM**

(57) A deep clustering method belongs to the field of artificial intelligence. An output layer of a first deep clustering model includes one or more first neurons, and the one or more first neurons are configured to output one or more first classes of raw data. The method includes: obtaining the one or more first classes output by the one or more first neurons; and when a similarity between at least two pieces of data corresponding to a first target class meets a splitting condition, splitting a target neuron at the output layer of the first deep clustering model, to obtain a second deep clustering model, where the first target class is at least one of the one or more first classes, data corresponding to the first target class includes a plurality of pieces of data, the target neuron is a first neuron that outputs the first target class in the one or more first neurons, an output layer of the second deep clustering model includes a plurality of second neurons, and the second neuron is configured to output a second class.

FIG. 1

## Description

This application claims priority to Chinese Patent Application No. 202211122497.5, filed with the China National Intellectual Property Administration on September 15, 2022 and entitled "DEEP CLUSTERING METHOD, APPARATUS, AND SYSTEM", which is incorporated herein by reference in its entirety.

## TECHNICAL FIELD

This application relates to the field of artificial intelligence (artificial intelligence, AI), and in particular, to a deep clustering method, apparatus, and system.

## BACKGROUND

Artificial intelligence (artificial intelligence, AI) is a theory, method, technology, and application system that simulates, extends, and expands human intelligence by using a digital computer or a machine controlled by a digital computer, to perceive an environment, obtain knowledge, and obtain an optimal result by using the knowledge. In other words, artificial intelligence is a branch of computer science that intends to understand the essence of intelligence and produce a new intelligent machine that can react in a manner similar to human intelligence. Artificial intelligence is to study design principles and implementation methods of various intelligent machines, so that the machines have perception, inference, and decision-making functions. Research in the field of artificial intelligence includes robots, natural language processing, computer vision, decision-making and inference, human-machine interaction, recommendation and search, AI basic theories, and the like.

Machine learning is a method for implementing artificial intelligence. An objective of the method is to design and analyze some algorithms, that is, models that allow a computer to automatically "learn". The designed algorithms are referred to as machine learning models. The machine learning model is a type of algorithm that obtains a rule by automatically analyzing data and predict unknown data according to the rule. There are various types of machine learning models. The machine learning models may be classified into: 1. supervised learning model; and 2. unsupervised learning model, depending on whether a label corresponding to training data needs to be relied on during model training.

A clustering algorithm is an unsupervised learning model in machine learning, and is widely used in data science fields such as data mining and pattern recognition. A conventional clustering algorithm is often not good enough for complex high-dimensional data. With development of deep learning, especially unsupervised learning, a deep neural network-based clustering algorithm achieves a better result for high-dimensional data than the conventional clustering algorithm.

An existing deep clustering algorithm is mainly a parametric clustering algorithm, that is, a number of clustering classes needs to be specified in advance before clustering. However, in reality, a specific number of classes of a type of data that needs to be clustered is often unpredictable in advance. As a result, the parametric clustering algorithm cannot be applied in practice. For the existing deep clustering algorithm, a number of classes needs to be specified in advance during clustering to construct a fixed network structure, resulting in low flexibility and poor practicability of the algorithm.

## SUMMARY

Embodiments of this application provide a deep clustering method, apparatus, and system. A number of classes does not need to be specified in advance during clustering, so that a network structure can be dynamically optimized, and an algorithm has high algorithm flexibility and practicability.

According to a first aspect, an embodiment of this application provides a deep clustering method. An output layer of a first deep clustering model includes one or more first neurons, and the one or more first neurons are configured to output one or more first classes of raw data. The method includes: obtaining the one or more first classes output by the one or more first neurons; and when a similarity between at least two pieces of data corresponding to a first target class meets a splitting condition, splitting a target neuron at the output layer of the first deep clustering model, to obtain a second deep clustering model, where the first target class is at least one of the one or more first classes, data corresponding to the first target class includes a plurality of pieces of data, the target neuron is a first neuron that outputs the first target class in the one or more first neurons, an output layer of the second deep clustering model includes a plurality of second neurons, and the second neuron is configured to output a second class. In view of this, a neuron can be split based on a similarity measure between intra-class data without knowing a specific number of data classes, so that the deep neural network automatically and dynamically adjusts a number of neurons and updates a dimension of the output layer of the deep clustering model, to automatically infer a number of clustering categories and complete clustering. The method can adapt to various parametric deep clustering algorithms to obtain an optimal result of non-parametric clustering. The optimal result meets a requirement that data of a same class is similar and data of different classes is not similar.

In some implementable implementations, a number of one or more first classes output by the first neuron is preset. In view of this, the one or more first classes corresponding to the raw data may be obtained by using a parametric deep clustering model without knowing a specific number of data classes, and the one or more first classes are not an optimal clustering result.

In some implementable implementations, the raw data includes picture data, text data, voice data, a medical image, or video data. In view of this, a deep clustering model obtained by using the deep clustering method provided in this embodiment of this application may be used in artificial intelligence equipment such as an autonomous driving device and a terminal device, to complete actual tasks such as pattern recognition and data mining.

In some implementable implementations, the similarity between the at least two pieces of data corresponding to the first target class is obtained by using the following steps: determining probability distributions of the at least two pieces of data corresponding to the first target class; and obtaining, based on a similarity between the probability distributions of the at least two pieces of data corresponding to the first target class, the similarity between the at least two pieces of data corresponding to the first target class. In view of this, a similarity measure between two different classes of data can be obtained.

In some implementable implementations, the splitting condition includes: a first JS divergence is greater than a splitting threshold, where the first JS divergence indicates the similarity between the at least two pieces of data corresponding to the first target class. In view of this, the target neuron at the output layer of the first deep clustering model can be split once or a plurality of times, to obtain a plurality of second neurons. A splitting condition is determined based on a JS divergence between two pieces of data of a same class. When the splitting condition is met, neuron splitting is performed, so that the deep neural network can automatically and dynamically adjust a number of neurons, to optimize a structure of the deep clustering model. This effectively resolves a problem that the deep clustering model is not flexible enough.

In some implementable implementations, the splitting threshold is $T_S$ :

$$T_s = \frac{\lambda}{2K(\lambda + K + 1)} \sum_{k_1, k_2 \in [K]} JS\left(k_1 \| k_2\right)$$

In the formula, $k_1$ and $k_2$ are two first classes that are different from the target class in the plurality of first classes, $JS(k_1 \| k_2)$ is a JS divergence value between the two classes $k_1$ and $k_2$, $\lambda$ is a balance parameter, and $K$ is a number of first classes. In view of this, a JS divergence between the intra-class data and a splitting threshold can be automatically calculated, and the splitting condition is further specified that a JS divergence between two pieces of data of a same class is greater than the splitting threshold, to accurately estimate a number of actual data classes without affecting performance of an original algorithm.

In some implementable implementations, the plurality of second neurons of the second deep clustering model output a plurality of second classes, and a number of second classes is a number of second neurons. In view of this, a number of classes obtained by splitting can be automatically inferred based on a number of neurons obtained by splitting, to accurately estimate a number of actual data classes without affecting performance of an original algorithm.

In some implementable implementations, each of weights of the plurality of second neurons at the output layer of the second deep clustering model is a superposition value of a weight of the target neuron and a plurality of pieces of Gaussian noise. In view of this, a weight of a split neuron of the deep clustering model may be determined, to further optimize the deep clustering model. This effectively resolves a problem that the deep clustering model is not flexible enough.

In some implementable implementations, the method includes: training the second deep clustering model; using the raw data and a number of second classes as an input of the second deep clustering model; and with convergence of a first loss function as a target, training the second deep clustering model, and optimizing and updating the plurality of weights of the plurality of second neurons at the output layer of the second deep clustering model, to obtain a trained second deep clustering model. In view of this, the deep neural network with a neuron being split can automatically and dynamically adjust a weight of the neuron in a training process, to optimize an output of the deep clustering model. This effectively resolves a problem that the deep clustering model is not flexible and accurate enough.

In some implementable implementations, a plurality of second classes of the raw data are determined by using the trained second deep clustering model. This can effectively resolve a problem that a classification result output by the deep clustering model is not accurate enough.

In some implementable implementations, when the similarity between the at least two pieces of data corresponding to the first target class fails to meet the splitting condition, the method further includes: when a similarity between the data corresponding to the first target class and data corresponding to a second target class meets an aggregation condition, aggregating a plurality of target neurons at the output layer of the first deep clustering model, to obtain a third deep clustering model, where the second target class is at least one of the one or more first classes, the plurality of target neurons are a plurality of first neurons that output the first target class and the second target class in the one or more first neurons, an output layer of the third deep clustering model includes one or more third neurons, the one or more third neurons are neurons obtained by aggregating the plurality of target neurons, and the third neuron is configured to output a third class. In view of this, neurons can be aggregated based on a similarity measure between inter-class data without knowing a specific number of data classes, so that the deep neural network automatically and dynamically adjusts a number of neurons and updates a dimension of the output layer of the deep clustering model, to automatically infer a number of clustering categories and complete clustering.

In some implementable implementations, the aggregation condition includes: a second JS divergence is less than an aggregation threshold, where the second JS divergence indicates the similarity between the data corresponding to the first target class and the data corresponding to the second target class. In view of this, the plurality of target neurons at the output layer of the first deep clustering model may be aggregated once or a plurality of times, to obtain one or more third neurons. It is determined based on a JS divergence between different types of data that neuron aggregation is performed, so that the deep neural network automatically and dynamically adjusts a number of neurons, to optimize a structure of the deep clustering model. This effectively resolves a problem that the deep clustering model is not flexible enough.

In some implementable implementations, the aggregation threshold is $T_m$ :

$$T_m = \frac{\lambda}{2(K-1)(\lambda+K)} \sum_{k_1,k_2 \in [K-2]} JS\left(k_1 \| k_2\right)$$

The aggregation condition is $JS(K\text{-}1\|K)<T_m$, where $JS(K\text{-}1\|K)$ is a JS divergence between $K^{th}$-type data and $(K\text{-}1)^{th}$-type data corresponding to the plurality of target classes. In view of this, a JS divergence between the inter-class data and an aggregation threshold $T_s$ can be automatically calculated, to accurately estimate a number of actual data classes without affecting performance of an original algorithm.

In some implementable implementations, one or more third neurons of the third deep clustering model output one or more third classes, and a number of third classes is a number of third neurons. In view of this, a number of classes obtained through aggregation can be automatically inferred, to accurately estimate a number of actual data classes without affecting performance of an original algorithm.

In some implementable implementations, one or more weights of the one or more third neurons of the third deep clustering model are an average value of weights of the plurality of target neurons of the first deep clustering model. In view of this, weights of neurons can be aggregated, so that the deep neural network automatically and dynamically adjusts the weights of the neurons in an aggregation process, to further optimize the deep clustering model. This effectively resolves a problem that the deep clustering model is not flexible enough.

In some implementable implementations, the method includes training the third deep clustering model: using the raw data and the number of third classes as an input of the second deep clustering model, and with convergence of a second loss function as a target, training the third deep clustering model, and optimizing and updating a plurality of weights of the plurality of third neurons at the output layer of the third deep clustering model, and training the third deep clustering model, to obtain a trained third deep clustering model. In view of this, the aggregated deep neural network automatically and dynamically adjusts the weight of the neuron in the training process, to optimize the weight of the neuron at the output layer of the deep clustering model. This effectively resolves a problem that an output of the deep clustering model is not accurate enough.

In some implementable implementations, the one or more third classes of the raw data are determined by using the trained third deep clustering model. This effectively resolves a problem that an output of the deep clustering model is not accurate enough.

According to a second aspect, an embodiment of this application provides a deep clustering method. An output layer of a first deep clustering model includes a plurality of first neurons, and the plurality of first neurons are configured to output a plurality of first classes of raw data. The method includes: obtaining the plurality of first classes output by the plurality of first neurons; and when a similarity between data corresponding to a plurality of target classes meets an aggregation condition, aggregating a plurality of target neurons at the output layer of the first deep clustering model, to obtain a second deep clustering model, where the plurality of target classes are at least two of the plurality of first classes, the target neurons are first neurons that output the target classes in the plurality of first neurons, an output layer of the second deep clustering model includes a plurality of second neurons, the second neurons are neurons obtained by aggregating the target neurons, and the second neuron is configured to output a second class. Beneficial effect of the second aspect is the same as that of the first aspect, and details are not described herein again.

In some implementable implementations, when the similarity between the data corresponding to the plurality of target classes does not meet the aggregation condition, the method further includes: when a similarity between at least two pieces of data corresponding to any target class meets a splitting condition, splitting a target neuron at the output layer of the first deep clustering model, to obtain a third deep clustering model, where data corresponding to the target class includes a plurality of pieces of data, the target neuron is a first neuron that outputs the target class in one or more first neurons, an output layer of the third deep clustering model includes one or more third neurons, the one or more third neurons are neurons obtained by splitting the target neuron, and the third neuron is configured to output a third class.

According to a third aspect, an embodiment of this application provides a deep clustering apparatus, including: configured to perform the method according to the first aspect, and including: a first deep clustering model, configured to output one or more first classes output by one or more first neurons, where an output layer of the first deep clustering model includes the one or more first neurons, and the one or more first neurons are configured to output one or more first classes of raw data; and a splitting-aggregation module, configured to: when a similarity between at least two pieces of data corresponding to a target class meets a splitting condition, split a target neuron at the output layer of the first deep clustering model, to obtain a second deep clustering model, where the target class is at least one of the one or more first classes, data corresponding to the target class includes a plurality of pieces of data, the target neuron is a first neuron that outputs the target class in the one or more first neurons, an output layer of the second deep clustering model includes a plurality of second neurons, the plurality of second neurons are neurons obtained by splitting the target neuron, and the second neuron is configured to output a second class. Beneficial effect of the third aspect is the same as that of the first aspect, and details are not described herein again.

According to a fourth aspect, an embodiment of this application provides a deep clustering apparatus, configured to perform the method according to the second aspect, and including: a first deep clustering model, configured to output one or more first classes output by one or more first neurons, where an output layer of the first deep clustering model includes the one or more first neurons, and the one or more first neurons are configured to output one or more first classes of raw data; and a splitting-aggregation module, configured to: when a similarity between data corresponding to a plurality of target classes meets an aggregation condition, aggregate a plurality of target neurons at the output layer of the first deep clustering model, to obtain a second deep clustering model, where the plurality of target classes are at least two of the plurality of first classes, the target neurons are first neurons that output the target classes in the plurality of first neurons, an output layer of the second deep clustering model includes a plurality of second neurons, the second neurons are neurons obtained by aggregating the target neurons, and the second neuron is configured to output a second class.

According to a fifth aspect, an embodiment of this application provides a deep clustering system. The system includes: an intelligent device, configured to collect picture data, text data, voice data, a medical image, or video data, and a deep clustering apparatus, configured to perform the method according to any implementation of the first aspect or the method according to any implementation of the second aspect, to cluster the picture data, the text data, the voice data, the medical image, or the video data. Beneficial effect of the fifth aspect is the same as that of the first aspect, and details are not described herein again.

According to a sixth aspect, an embodiment of this application provides a computing device. The computing device includes a processor and a memory. The processor is configured to execute instructions stored in the memory, to enable the computing device to perform the method according to any implementation of the first aspect or the method according to any implementation of the second aspect. Beneficial effect of the sixth aspect is the same as that of the first aspect, and details are not described herein again.

According to a seventh aspect, an embodiment of this application provides a computing device cluster, including at least one computing device. Each computing device includes a processor and a memory. A processor of the at least one computing device is configured to execute instructions stored in the memory of the at least one computing device, to enable the computing device cluster to perform the method according to any implementation of the first aspect or the method according to any implementation of the second aspect.

According to an eighth aspect, an embodiment of this application provides a computer program product including instructions. When the instructions are run by a computing device cluster, the computing device cluster is enabled to perform the method according to any implementation of the first aspect or the method according to any implementation of the second aspect. Beneficial effect of the eighth aspect is the same as that of the first aspect, and details are not described herein again.

According to a ninth aspect, an embodiment of this application provides a computer-readable storage medium, including computer program instructions. When the computer program instructions are executed by a computing device cluster, the computing device cluster performs the method according to any implementation of the first aspect or the method according to any implementation of the second aspect. Beneficial effect of the ninth aspect is the same as that of the first aspect, and details are not described herein again.

## BRIEF DESCRIPTION OF DRAWINGS

To describe technical solutions of a plurality of embodiments disclosed in the specification more clearly, the following briefly describes the accompanying drawings used for describing embodiments. It is clear that the accompanying drawings in the following descriptions show merely the plurality of embodiments disclosed in the specification, and a person of ordinary skill in the art can still derive other drawings from these accompanying drawings without creative efforts.

The following briefly describes accompanying drawings that need to be used in descriptions of embodiments or the conventional technology.

FIG. 1 is a principle diagram of a deep clustering method according to an embodiment of this application;
FIG. 2 is an aggregation diagram of a deep clustering method according to an embodiment of this application;
FIG. 3 is a splitting diagram of a deep clustering method according to an embodiment of this application;
FIG. 4 is a flowchart of a deep clustering method according to an embodiment of this application;
FIG. 5 is a diagram of comparison between an experimental result according to a deep clustering method in an embodiment of this application and an experimental result in the conventional technology on a common aggregation dataset;
FIG. 6a is a diagram of comparison between clustering effect according to a deep clustering method in an embodiment of this application and clustering effect according to the conventional technology on an Imagenet-50 dataset;
FIG. 6b is a diagram of comparison between clustering effect according to a deep clustering method in an embodiment of this application and clustering effect according to a SCAN algorithm on a CIFAR-10 dataset;
FIG. 7 shows a deep clustering apparatus according to an embodiment of this application;
FIG. 8 is a diagram of a deep clustering system according to an embodiment of this application;
FIG. 9 is a diagram of a computing device according to an embodiment of this application;
FIG. 10 is a diagram of a computing device cluster according to an embodiment of this application; and
FIG. 11 is a diagram of a possible implementation of a computing device cluster according to an embodiment of this application.

## DESCRIPTION OF EMBODIMENTS

To make objectives, technical solutions, and advantages of embodiments of this application clearer, the following describes, with reference to the accompanying drawings, technical solutions in embodiments of a deep clustering method provided in embodiments of this application.

In descriptions of embodiments of this application, words such as "example" or "for example" are used to represent an example, an illustration, or a description. Any embodiment or design solution described as "example" or "for example" in embodiments of this application should not be interpreted as being more preferred or advantageous than another embodiment or design solution. Specifically, use of the words such as "example" or "for example" is intended to present related concepts in a specific manner.

In descriptions of embodiments of this application, the term "and/or" is merely an association relationship for describing associated objects, and indicates that three relationships may exist. For example, A and/or B may indicate: only A exists, only B exists, and both A and B exist. In addition, unless otherwise specified, the term "a plurality of" means two or more. For example, a plurality of systems means at least two systems, and a plurality of terminals means at least two terminals.

In addition, the terms "first" and "second" are merely used for a description purpose, and shall not be understood as indicating or implying relative importance or implicitly including indicated technical features. Therefore, a feature limited by "first" or "second" may explicitly or implicitly include one or more features. The terms "include", "comprise", "have", and their variants all mean "include but are not limited to", unless otherwise specifically emphasized.

Descriptions of embodiments of this application relate to "some embodiments" that describe subsets of all possible embodiments, but it may be understood that "some embodiments" may be same or different subsets of all the possible embodiments and may be combined with each other without conflict.

In descriptions of embodiments of this application, the terms "first\second\third, and the like", or a module A, a module B, a module C, and the like are merely used to distinguish between similar objects, and do not represent a specific order of objects. It may be understood that specific orders or sequences may be interchanged when allowed, so that embodiments of this application described herein can be implemented in an order other than those shown or described herein.

In descriptions of embodiments of this application, involved reference numerals such as S110 and S120 that indicate steps do not necessarily indicate that the steps are to be performed based on the order, and consecutive steps may be exchanged if permitted, or may be performed simultaneously.

In descriptions of embodiments of this application, a deep clustering (deep clustering) algorithm is a deep neural network-based clustering algorithm.

A JS divergence (Jensen-Shannon divergence, JS) is a similarity measure between probability distributions of two pieces of classification data. The JS divergence is used to measure a similarity between two pieces of probability distribution.

A parametric clustering (parametric clustering, PC) algorithm is a type of clustering algorithm in which a number of clustering classes needs to be specified in advance.

A non-parametric clustering (non-parametric clustering, NPC) algorithm is a type of clustering algorithm in which a number of clustering classes does not need to be specified in advance.

Unless otherwise defined, all technical and scientific terms used in this specification have same meanings as those usually understood by a person skilled in the art of this application. The terms used in this specification are merely intended to describe embodiments of this application, and are not intended to limit this application.

According to a first solution, a parametric clustering algorithm is provided and a deep neural network is used. The deep neural network has a fixed structure. A linear layer is connected to a backbone network, and end-to-end training is performed through comparative learning, to classify images without labels. In this way, direct clustering of unlabeled data is implemented based on a semantic clustering loss. For the parametric clustering algorithm, a number of classes for sample clustering needs to be specified in advance.

For example, there are 100 image samples without labels, including four classes of images: cow, sheep, pig, and dog. It is specified in advance that a number of classes for sample clustering is 4. According to the parametric clustering method provided in the first solution, the image samples without labels are input into a trained deep neural network with a linear layer for direct clustering. Based on a semantic clustering loss, 10 cow images, 30 sheep images, 35 pig images, and 25 dog images are obtained.

However, in most actual scenarios, a number of clustering classes cannot be determined, and an inappropriate number of initialized classes greatly affects a classification result, resulting in low flexibility, poor practicability, and poor performance of the algorithm.

According to a second solution, a deep clustering method is provided. The method is deep clustering with an unknown number of clusters (deep clustering with an unknown number of clusters). A deep neural network, combined with a Dirichlet process mixture model, can implement non-parametric clustering without specifying a number of classes. However, due to a complex training module and dependence on hyperparameters such as prior distribution, this solution is not universal and usable. In addition, according to this solution, only image data can be processed, but audio and text data cannot be processed. In view of this, algorithm performance and clustering effect of this solution are inferior to those of the parametric clustering method provided in the first solution.

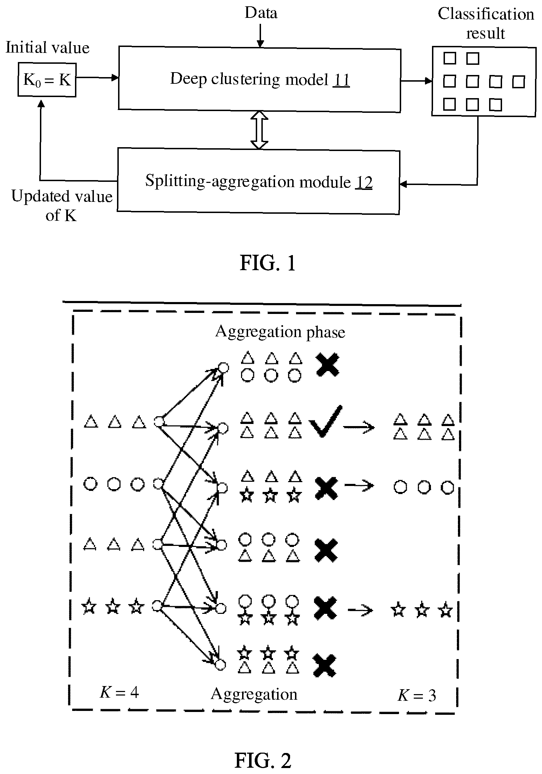

The following first describes a principle of a deep clustering method provided in this application with reference to FIG. 1 to FIG. 3.

A clustering algorithm is an unsupervised task. When a number K of classes is not accurate, a classification result output by a deep clustering model is not accurate. A principle of the deep clustering method provided in embodiments of this application is to automatically and dynamically adjust a number of neurons in an operation process by using the deep clustering model, so as to automatically infer a number of clustering classes, and classify data into different classes without supervision. The classification process meets a requirement that data of a same class is similar and data of different classes is not similar.

FIG. 1 is a principle diagram of a deep clustering method according to an embodiment of this application. As shown in FIG. 1, based on the premise that a specific number of data classes is unknown, a number $K_0 = K$ of initial classes is randomly given. Raw data is inferred by using a deep clustering model 11, and the classes are aggregated or split by using an aggregation-splitting-aggregation module 12. The deep clustering model 11 dynamically adjusts a number of neurons in a training process, and automatically infers a number of classes, to classify the data into different classes without supervision. The method can adapt to various parametric deep clustering models to obtain a non-parametric classification result. The classification result meets a clustering objective in which data of a same class is similar and data of different classes is not similar.

Step 1: A number of initial classes may be set to $K_0 = K$. The deep clustering model 11 is trained according to an existing parametric deep clustering algorithm. When a loss function value obtained through training reaches a stable threshold, the training ends. A classification result output by the deep clustering model 11 is input into the splitting-aggregation module 12. The classification result herein may be denoted as one or more first classes, and the deep clustering model 11 is denoted as a first deep clustering model. The number of initial classes herein is preset, and a number of first classes is the number of initial classes.

Step 2: The splitting-aggregation module 12 may determine, based on a similarity between data of a same class, whether to split the one or more first classes, or determine, based on a similarity between data of two classes, whether to aggregate the one or more first classes. The similarity between data may be calculated based on a JS divergence, where the JS divergence indicates a similarity between two pieces of data.

For example, if probabilities that one piece of data belongs to a first class, a second class, and a third class are 0.1, 0.7, and 0.2 respectively, and probabilities that the other piece of data belongs to the first class, the second class, and the third class are 0.101, 0.699, and 0.2 respectively, a similarity measure may be calculated based on probability distributions of the two pieces of data, to obtain a JS divergence between the two pieces of data. If the JS divergence is less than an aggregation threshold, it indicates that corresponding classes need to be further aggregated. Whether aggregation is needed can be determined based on whether a JS divergence between data of two classes meets the aggregation threshold.

When probability distributions of data of any two classes are similar, the data of the two classes is similar, and a JS divergence is less than the aggregation threshold, neurons of the deep clustering model 11 are aggregated, so that an output dimension of the deep clustering model 11 changes from K dimensions to K-1 dimensions. Then, a number of classes is updated to K-1 based on the output dimension obtained through aggregation.

As shown in FIG. 2, a number of initial classes is set to $K_0 = 4$. Four classes of graphic data are obtained as a classification result. In the four classes of graphic data, a first class includes triangles, a second class includes circles, a third class includes triangles, and a fourth class includes pentagons. Pairwise analysis is performed on the four classes of graphic data. For example, through comparison between the first class and the second class, a JS divergence is greater than a specified aggregation threshold, indicating that aggregation is not needed; through comparison between the second class and the third class, a JS divergence is greater than the specified aggregation threshold, indicating that aggregation is not needed; through comparison between the first class and the third class, a JS divergence is less than the specified aggregation threshold, indicating that an aggregation condition is met; and through comparison between other combinations of the four classes, a JS divergence is greater than the specified threshold, indicating that aggregation is not needed. In this case, the first class and the third class may be aggregated into one class, and a number of classes is updated to 3.

If probability distributions of two pieces of data of a same class are not similar, for example, the probability distribution is 0.1 and 0.7 respectively, the two pieces of data are not similar, and a JS divergence is greater than a splitting threshold, indicating that a corresponding class needs to be further split. Similarly, whether splitting is needed may be determined by determining whether the JS divergence meets the splitting threshold.

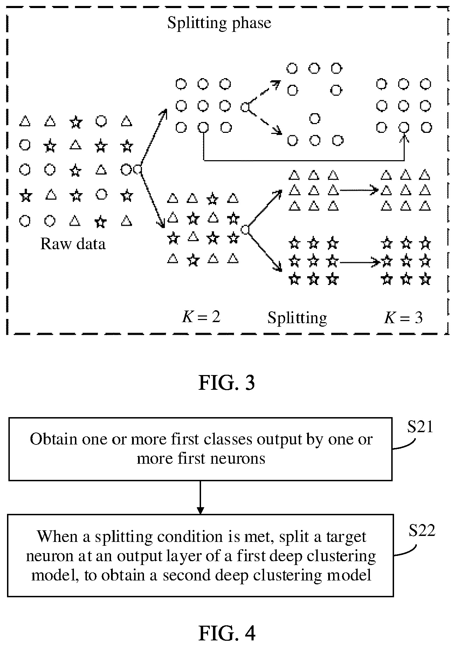

As shown in FIG. 3, in this phase, a number of initial classes is set to $K_0 = 2$. Raw data of a plurality of classes that include triangles, circles, and pentagons is clustered by using a parametric deep clustering model, and is split into two classes. The first class includes circles, and the second class includes triangles and pentagons. A similarity between probability distributions of data of any two subclasses in the first class is calculated. Because the data of any two subclasses in the first class is circles, it may be known that a JS divergence between the two subclasses is less than a splitting threshold. In this case, the data of the two subclasses in the first class does not need to be split. Then, a similarity between probability distributions of two subclasses in the second class is calculated. Data of any two subclasses in the second class is triangles and pentagons, probability distributions of the two subclasses are not similar, and a JS divergence is greater than a splitting threshold. In this case, the second class is split into two subclasses: triangles and pentagons. In this way, the second class may be split into two classes, and a number of classes is updated to 3.

Step 3: Based on the updated number of classes, the deep clustering model 11 is adaptively updated according to the parametric deep clustering algorithm again. A number of clusters is dynamically adjusted by splitting or aggregating neurons, and finally a number of classes is determined, so that data of a same class is classified into a same class, to achieve a clustering effect that meets clustering objective requirement.

According to the deep clustering method provided in this embodiment of this application, splitting or aggregation may be performed by using the splitting-aggregation module 12. The splitting-aggregation module 12 is a plug-and-play algorithm and is highly universal, and can be used together with a parametric clustering algorithm to achieve more accurate clustering effect and stable performance. The splitting-aggregation module 12 trained with the deep clustering model 11 may be used in various unsupervised tasks based on an input, for example, image data, text data, and voice data.

The deep clustering model 11 obtained by using the deep clustering method provided in this embodiment of this application may be used in artificial intelligence equipment such as an autonomous driving device and a terminal device, to complete actual tasks such as pattern recognition and data mining.

The following describes in detail the deep clustering method provided in this application with reference to the accompanying drawings.

FIG. 4 is a flowchart of a deep clustering method according to an embodiment of this application. As shown in FIG. 4, this embodiment of this application provides the deep clustering method. An output layer of a first deep clustering model includes one or more first neurons, and the one or more first neurons are configured to output one or more first classes of raw data. The method includes: S21: obtaining the one or more first classes output by the one or more first neurons; and S22: when a similarity between at least two pieces of data corresponding to a target class meets a splitting condition, splitting a target neuron at the output layer of the first deep clustering model, to obtain a second deep clustering model, where the target class is at least one of the one or more first classes, data corresponding to the target class includes a plurality of pieces of data, the target neuron is a first neuron that outputs the target class in the one or more first neurons, an output layer of the second deep clustering model includes a plurality of second neurons, and the second neuron is configured to output a second class. The target class herein may be denoted as a first target class.

In some embodiments, a number of one or more first classes output by the first neuron is preset.

For example, a number of initial classes may be preset. In this case, the number of one or more first classes output by the first neuron is the number of initial classes.

For example, the number of initial classes may be set to $K_0 = 4$. In this case, the number of one or more first classes output by the first neuron is 4.

In some embodiments, the raw data includes picture data, text data, voice data, a medical image, or video data.

In some embodiments, in step S21, the one or more first classes are obtained by using the following steps S211 to S214.

S211: Set a number of initial classes, and denote the number of initial classes as a first value.

S212: Input the raw data and the first value into the deep clustering model 11.

In some embodiments, the raw data may be any one of the following data: picture data, text data, voice data, a medical image, or video data. One of the picture data, the text data, the voice data, the medical image, or the video data, and the number $K_0$ = 4 of initial classes may be input into the deep clustering model 11.

In some embodiments, the deep clustering model 11 may be any existing parametric deep clustering model, for example, the parametric deep clustering model provided in the first solution.

For example, the given number $K_0$ = 4 of initial classes and the picture data may be input into the deep clustering model 11.

For example, a given number $K_0$ = 3 of initial classes and several pieces of text data may be input into the deep clustering model 11.

For example, a given number $K_0$ = 7 of initial classes and several pieces of voice data may be input into the deep clustering model 11.

S213: Train the deep clustering model 11 with convergence of a loss function as a target.

In some embodiments, a parametric deep clustering model 11 may be trained until a loss function value of the parametric deep clustering model 11 does not decrease anymore. In this case, a trained deep clustering model 11 is obtained. The parametric deep clustering model 11 may be denoted as the first deep clustering model.

In some embodiments, when the loss function value obtained through training reaches a stable threshold, the trained deep clustering model 11 is obtained.

S214: Determine, based on an output of the trained deep clustering model 11, a plurality of classes of data corresponding to the raw data, to obtain the one or more first classes output by the one or more first neurons, where the plurality of classes of data corresponding to the raw data herein may be denoted as the one or more first classes.

For example, a number of initial classes may be randomly set to $K_0$ = 4. $K_0$ = 4 and 100 image data samples are input into the deep clustering model 11, and the deep clustering model 11 is trained according to an existing parametric deep clustering algorithm. When a loss function value obtained through training reaches a stable threshold, a plurality of classification results output by the deep clustering model 11 are obtained.

In some embodiments, in step S22, the second deep clustering model is obtained by using the following steps S221 to S224.

S221: Obtain the similarity between the at least two pieces of data corresponding to the target class.

In some embodiments, step S221 is implemented by using the following steps.

S2211: Determine probability distributions of the at least two pieces of data corresponding to the target class.

In some embodiments, the target class includes data of a first class and data of a second class, and probability distribution of the data of the first class and probability distribution of the data of the second class are determined.

For example, if probabilities that data of a first class in a target class belongs to the first class, a second class, and a third class are 0.301, 0.499, and 0.2 respectively, and probabilities that data of a second class in the target class belongs to the first class, the second class, and the third class are 0.299, 0.501, and 0.2 respectively, a similarity measure may be calculated based on probability distributions of the two classes of data, to obtain a JS divergence between the two classes of data.

S2212: Obtain, based on the probability distributions of the at least two pieces of data corresponding to the target class, the similarity between the at least two pieces of data corresponding to the target class.

In some embodiments, a similarity between the probability distribution of the data of the first class and the probability distribution of the data of the second class in the target class may be calculated, to obtain a similarity between the two classes of data.

For example, a similarity between probability distribution is calculated based on the probability distribution of the data of the first class and the probability distribution of the data of the second class in the target class, to obtain a JS divergence between the data of the first class and the data of the second class. If the JS divergence is greater than a splitting threshold, the data of the first class of and the data of the second class are not similar. If the JS divergence is less than an aggregation threshold, the data of the first class of and the data of the second class are similar.

In some embodiments, the target class further includes data of a third class, and a probability distribution of the data of the third class may be determined. A similarity between the probability distribution of the data of the first class and the probability distribution of the data of the third class, or a similarity between the probability distribution of the data of the second class and the probability distribution of the data of the third class is calculated, to obtain a similarity between a plurality of pieces of data.

S222: Determine a clustering objective based on the plurality of classes of data. The clustering objective means that data of a same class in a plurality of target classes is classified into a same class, and a number of classes is the smallest. The clustering objective is as follows:

$$\arg\min_{K} \sum_{k\in[K]}\sum_{i,j}d\left(x_i^k,x_j^k\right)-\frac{\lambda}{K}\sum_{k_1,k_2\in[K]}^{k_1\ne k_2}\sum_{}d\left(x_i^{k_1},x_j^{k_2}\right) \quad (1)$$

In Formula (1), a given dataset x includes N pieces of raw data, where $K$ is a number of classes of the dataset $x$, and in this embodiment of this application, K may be a number of first classes. N pieces of data are classified into $K$ classes. To achieve a clustering objective in which data of a same class is classified into a same class and a number of classes is the smallest, $x_i^k$ indicates an $i$th sample in a $k$th class, $d(.,.)$ is a measure that describes a similarity between two samples $x_i, x_j$, [K] represents a set of natural numbers from 1 to K, and $\lambda$ is a balance parameter and is used as a hyperparameter to balance weights of the former item and the latter item in Formula (1). $\arg\min_{K}$ is a K value satisfying minimization. In terms of physical meaning, Formula (1) is to classify data of a same class into a same class to reduce a number of classes.

S223: Determine, based on the clustering objective, whether the one or more first classes output by the first deep clustering model meet the splitting condition.

An objective of splitting is to classify data of different classes into different classes. If a similarity between probability distributions of two subclasses in data of a specific class in the one or more first classes meets the splitting condition, that is, if the data of the specific class can be further classified into two classes, it indicates that the corresponding class needs to be split. The class that needs to be split is denoted as the target class.

In some embodiments, the following steps S2231 to S2234 may be performed to determine the splitting condition.

S2231: Increase a number of classes from K to $K$+1, to change the clustering objective from Formula (1) to Formula (2):

$$\min \sum_{k\in\left\{[K-1],\ K^1,K^2\right\}}D(k,k)-\frac{\lambda}{K+1}\sum_{k_1,k_2\in\left\{[K-1],K^1,K^2\right\}}^{k_1\ne k_2}D(k_1,k_2) \quad (2)$$

In the formula, $K^1$ and $K^2$ represent two subclasses obtained by splitting a target class $K$, and $D(.,.)$ is used to determine a similarity between two pieces of data.

S2232: Compare values of Formula (2) that are obtained before and after splitting, and if a value, obtained when the number of classes is $K$+1, of Formula (2) is less than a value, obtained when the number of classes is K, of Formula (2), determine that the splitting condition is met.

In this case, it is determined according to Formula (2) that the splitting condition is:

$$\sum_{k\in\left\{[K-1],K^1,K^2\right\}}D(k,k)-\frac{\lambda}{K+1}\sum_{k_1,k_2\in\left\{[K-1],K^1,K^2\right\}}^{k_1\ne k_2}D(k_1,k_2) < \sum_{k\in[K]}D(k,k)-\frac{\lambda}{k}\sum_{k_1,k_2\in[K]}D(k_1,k_2) \quad (3)$$

A similarity between probability distributions of at least two pieces of data in the target class $K$ needs to be compared, to determine whether data of the target class needs to be split. The following may be further deduced from Formula (3):

$$\left(\frac{2\lambda}{K+1}+2\right)D\left(K^1,K^2\right) > \frac{\lambda}{K(K+1)}\sum_{k_1,k_2\in[K]}^{k_1\ne k_2}D(k_1,k_2) \quad (4)$$

In the formula, $D(K^1,K^2)$ is a similarity measure between any two subclasses $K^1$ and $K^2$ in the target class $K$.

In some embodiments, a first JS divergence may indicate a similarity between the at least two pieces of data in the target class K. The similarity may be obtained according to Formula (4):

$$\left(\frac{2\lambda}{K+1}+2\right)JS\left(K^1\middle\|K^2\right) > \frac{\lambda}{K(K+1)}\sum_{k_1,k_2\in[K]}JS(k_1\|k_2) \quad (5)$$

Whether a class of data needs to be split may be determined based on whether a JS divergence between two subclasses $K^1$ and $K^2$ in the class of data is greater than the splitting threshold.

S2233: Indicate a JS divergence between data of any two subclasses $K^1$ and $K^2$ in the target class $K$ by the first JS divergence $JS(K^1 \| K^2)$ according to Formula (5), to obtain:

$$JS\left(K^1 \| K^2\right) > \frac{\lambda}{2K\left(\lambda + K + 1\right)} \sum_{k_1, k_2 \in [K]} JS\left(k_1 \| k_2\right) \quad (6)$$

$$\frac{\lambda}{2K\left(\lambda + K + 1\right)} \sum_{k_1, k_2 \in [K]} JS\left(k_1 \| k_2\right)$$

may be denoted as a splitting threshold $T_s$. In terms of physical meaning expressed in Formula (6), when a $JS$ divergence $JS(K^1 \| K^2)$ between any two subclasses $K^1$ and $K^2$ in the target class $K$ is greater than the splitting threshold $T_s$, the target class $K$ needs to be split.

The following is obtained according to Formula (6):

$$JS\left(K^1 \| K^2\right) > T_s \quad (7)$$

$$T_s = \frac{\lambda}{2K\left(\lambda + K + 1\right)} \sum_{k_1, k_2 \in [K]} JS\left(k_1 \| k_2\right) \quad (8)$$

In the formula, $K^1$ and $K^2$ are two subclasses in the target class $K$, $k_1$ and $k_2$ are two classes that are different from the target class in first classes, and $JS(k_1 \| k_2)$ is a $JS$ divergence value between the two classes $k_1$ and $k_2$.

In some embodiments, the splitting condition includes that the first JS divergence $JS(K^1 \| K^2)$ is greater than the splitting threshold.

S2234: If the splitting condition is met, perform S224; or if the splitting condition is not met, the procedure proceeds to step S23.

S224: When the JS divergence is greater than the splitting threshold, split the target neuron at the output layer of the first deep clustering model once or a plurality of times, to obtain a plurality of second neurons.

In some embodiments, under a condition that the first JS divergence is greater than the splitting threshold, classes of the one or more first classes may be split once or a plurality of times, to determine a number of second classes.

In some embodiments, the plurality of second neurons at the output layer of the second deep clustering model output a plurality of second classes, and a number of second classes is a number of second neurons.

For example, after a neuron at the output layer of the deep clustering model 11 is split once, a number of neurons at the output layer changes from $K$ to $K+1$, and an output dimension changes from $K$ dimensions to $(K+1)$ dimensions. In this case, the deep clustering model 11 obtained by splitting the neuron at the output layer is denoted as the second deep clustering model.

For example, there are $K$ initial classes. If $N$ classes meet the splitting condition, after $N$ neurons at a corresponding output layer are completely split, a number of neurons at the output layer changes from $K$ to $K+N$, an output dimension changes from $K$ dimensions to $(K + N)$ dimensions, and a number of second classes is $K + N$. In this case, the deep clustering model 11 obtained by splitting neurons at the output layer is denoted as the second deep clustering model.

In some embodiments, each of weights of the plurality of second neurons in the second deep clustering model is a superposition value of a weight of the target neuron and Gaussian noise.

For example, during splitting, one neuron at an output layer of an original deep clustering model 11 is changed into at least two neurons, and a weight of each of the two neurons obtained by splitting is obtained by randomly superimposing an original weight of the one neuron and a disturbance value, where the disturbance value obtained by superimposing at any time may be Gaussian noise.

In some embodiments, steps S21 and S22 may be repeatedly performed after the number of initial classes is updated from the first value to the number of second classes. In this case, the neuron of the deep clustering model 11 has been split to obtain the second deep clustering model, and the second deep clustering model is trained until the second class meets a requirement that data of a same class is similar and data of different classes is not similar.

In some embodiments, the second deep clustering model is trained by using the following steps S2241 and S2242.

S2241: Determine a number of second classes based on a number of second neurons at the output layer of the second deep clustering model.

S2242: Perform optimization training on weights of the plurality of second neurons at the output layer of the second deep clustering model by using the raw data and the number of second classes as an input of the second deep clustering model and with convergence of a first loss function as a target, where the plurality of weights of the plurality of second neurons at the output layer of the second deep clustering model are optimized and updated in the training process, to obtain a trained second deep clustering model.

In some embodiments, a plurality of second classes of the raw data may be determined by using the trained second deep clustering model.

S23: When the similarity between the at least two pieces of data corresponding to the target class cannot meet the splitting condition, determine whether neurons at the output layer of the first deep clustering model need to be aggregated.

An objective of aggregation is to classify data of a same class into a same class. If a similarity between at least two pieces of data corresponding to a plurality of first classes output by the deep clustering model 11 meets the aggregation condition, it indicates that two corresponding classes need to be further aggregated.

In some embodiments, the following steps S231 to S234 may be performed to determine whether aggregation is needed.

S231: Reduce a number $K$ of classes to $K$-1, so that the clustering objective is converted from Formula (1) to:

$$\min \sum_{k \in \{[K-2], \ K^m\}} D(k,k) - \frac{\lambda}{K-1} \sum_{\substack{k_1 \neq k_2 \\ k_1, k_2 \in \{[K-2], \ K^m\}}} D(k_1, k_2) \quad (9)$$

In Formula (9), $K^m$ is a class obtained by aggregating a target class $K$ and a target class $K$-1.

S232: Compare values of Formula (9) that are obtained before and after aggregation, and determine an aggregation condition if a value, obtained when a number of a plurality of target classes is $K$-1, of Formula (9) is less than a value, obtained when a number of a plurality of target classes is $K$, of Formula (9).

In this case, it is determined according to Formula (9) that the aggregation condition is:

$$\sum_{k \in \{[K-2], \ K^m\}} D(k,k) - \frac{\lambda}{K-1} \sum_{\substack{k_1 \neq k_2 \\ k_1, k_2 \in \{[K-2], \ K^m\}}} D(k_1, k_2) < \sum_{k \in [K]} D(k,k) - \frac{\lambda}{K} \sum_{\substack{k_1 \neq k_2 \\ k_1, k_2 \in [K]}} D(k_1, k_2) \quad (10)$$

A similarity between any piece of data of a K - 1th class and a Kth class needs to be compared, to determine whether a target class $K$ and a target class $K$-1 in a plurality of target classes need to be aggregated. The following may be further deduced from Formula (10):

$$\left(\frac{2\lambda}{K} + 2\right) D(K-1, K) < \frac{\lambda}{K(K-1)} \sum_{\substack{k_1 \neq k_2 \\ k_1, k_2 \in \{[K-2], \ K^m\}}} D(k_1, k_2) \quad (11)$$

$D(K$-1, $K)$ is a similarity measure between data of a target class $K$ and data of a target class $K$-1. The similarity may be obtained based on a similarity between two pieces of data, namely, a JS divergence. The target class $K$ may be denoted as a first target class, and the target class $K$-1 may be denoted as a second target class.

In some embodiments, a second JS divergence $JS(K$-1$\|K)$ may indicate a similarity between data corresponding to the first target class and data corresponding to the second target class.

In some embodiments, a JS divergence may indicate a similarity between at least two pieces of data of at least two target classes.

According to Formula (11), a similarity between data corresponding to the target class $K$ in the plurality of target classes and data corresponding to the target class $K$-1 in the plurality of target classes is indicated by $JS(K$-1$\|K)$, so as to obtain:

$$JS(K-1\|K) < \frac{\lambda}{2(K-1)(\lambda+K)} \sum_{k_1, k_2 \in [K-2]} JS(k_1 \| k_2) \quad (12)$$

$$\frac{\lambda}{2(K-1)(\lambda+K)} \sum_{k_1,k_2 \in [K-2]} JS\left(k_1 \| k_2\right)$$

may be denoted as an aggregation threshold $T_m$.

In terms of physical meaning expressed in Formula (12), when a second *JS* divergence $JS(K\text{-}1\|K)$ between data corresponding to a target class $K$ in the plurality of target classes and data corresponding to a target class $K\text{-}1$ in the plurality of target classes is less than the aggregation threshold $T_m$, the target class $K$ and the target class $K\text{-}1$ meet the aggregation condition.

The following is obtained according to Formula (12):

$$JS\left(K-1\|K\right) < T_m \quad (13)$$

$$T_m = \frac{\lambda}{2(K-1)(\lambda+K)} \sum_{k_1,k_2 \in [K-2]} JS\left(k_1 \| k_2\right) \quad (14)$$

S233: If the aggregation condition is met, perform S24.

If neither the splitting condition nor the aggregation condition is met, step S21 is performed, the deep clustering model 11 is trained until a loss function converges, and then a classification result is output.

S24: When the similarity between the data corresponding to the first target class and the data corresponding to the second target class meets the aggregation condition, aggregate a plurality of target neurons at the output layer of the first deep clustering model, to obtain a third deep clustering model, where the second target class is at least one of the one or more first classes, the plurality of target neurons are a plurality of first neurons that output the first target class and the second target class in the one or more first neurons, an output layer of the third deep clustering model includes one or more third neurons, the third neurons are neurons obtained by aggregating the plurality of target neurons, and the third neuron is configured to output a third class.

In some embodiments, in step S24, the third class is obtained by using the following steps S241 and S242.

S241: Determining the aggregation condition includes that a second JS divergence is less than the aggregation threshold, where the second JS divergence indicates the similarity between the data corresponding to the first target class and the data corresponding to the second target class.

When the second JS divergence is less than the aggregation threshold, the plurality of target neurons at the output layer of the first deep clustering model may be aggregated once or a plurality of times, to obtain one or more third neurons.

In some embodiments, under a condition that the second JS divergence is less than the aggregation threshold, a plurality of first classes may be aggregated once or a plurality of times, to determine a number of third classes.

In some embodiments, one or more third neurons at the output layer of the third deep clustering model output one or more third classes, and the number of third classes is a number of third neurons.

For example, after two neurons at the output layer of the deep clustering model 11 are aggregated once, a number of neurons changes from $K$ to $K\text{-}1$, and an output dimension changes from $K$ dimensions to $(K\text{-}1)$ dimensions, to obtain a deep clustering model through neuron aggregation. In this case, the deep clustering model 11 obtained by splitting neurons at the output layer is denoted as the second deep clustering model.

For example, there are K initial classes. If $N$ neurons meet the aggregation condition, after $N$ neurons at a corresponding output layer are completely aggregated, a number of neurons at the output layer changes from $K$ to $K\text{-}N\text{+}1$, an output dimension changes from $K$ dimensions to $(K\text{-}N\text{+}1)$ dimensions, and a number of third classes is $K\text{-}N\text{+}1$. In this case, the deep clustering model 11 obtained by aggregating neurons at the output layer is denoted as the third deep clustering model.

S242: Determine one or more weights of the one or more third neurons of the third deep clustering model based on an average value of weights of the plurality of target neurons of the first deep clustering model.

For example, during aggregation, two original neurons are changed into one neuron, and a corresponding weight of the one neuron may be obtained by averaging weights of the two original neurons.

In some embodiments, steps S21 to S24 may be repeatedly performed after the number of classes is updated to the number of third classes. In this case, neurons of the deep clustering model 11 have been aggregated to obtain the third deep clustering model, and the third deep clustering model is trained until the classification result meets a requirement that data of a same class is similar and data of different classes is not similar.

In some embodiments, the third deep clustering model is trained by using the following steps S2431 and S2432.

S2431: Determine the number of third classes based on a number of third neurons at the output layer of the third deep clustering model.

S2432: Perform training on weights of the one or more third neurons at the output layer of the third deep clustering model by using the raw data and the number of third classes as an input of the third deep clustering model and with convergence of a second loss function as a target, where the plurality of weights of the plurality of third neurons at the output layer of the third deep clustering model are optimized and updated in the training process, to obtain a trained third deep clustering model.

In some embodiments, one or more third classes of the raw data may be determined by using the trained third deep clustering model.

In some embodiments, according to the deep clustering method provided in this embodiment of this application, any deep clustering model and a number $K_0$ of initial classes are given. Neuron splitting or aggregation may be alternately performed by calculating a splitting condition and an aggregation condition, so that the model stably converges to an optimal number of classes and data clustering is completed. The optimal number of classes is a number of minimum classes that meets a requirement that data of a same class is similar and data of different classes is not similar.

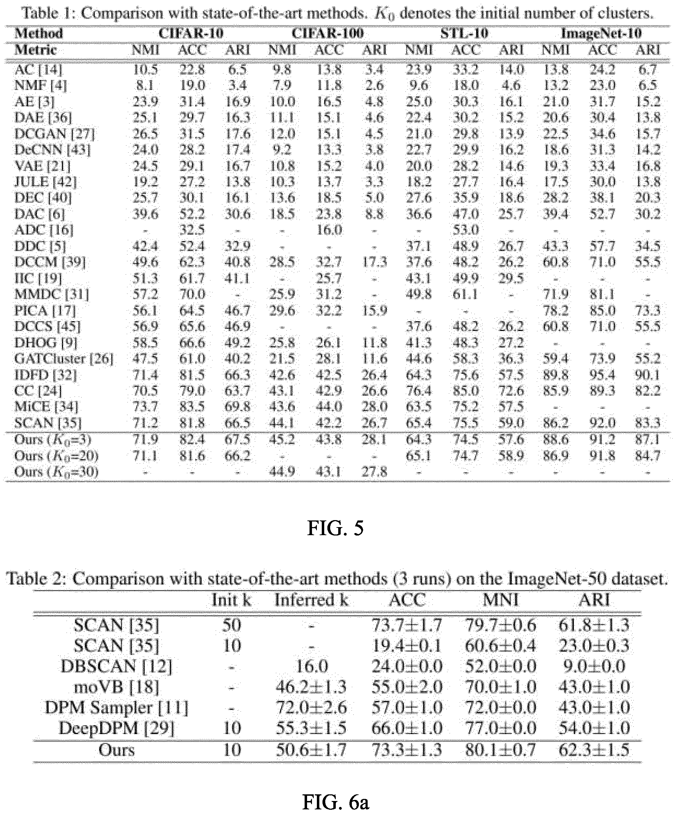

FIG. 5 is a diagram of comparison between an experimental result according to a deep clustering method in an embodiment of this application and an experimental result in the conventional technology on a common aggregation dataset.

As shown in FIG. 5, "Ours" is the deep clustering method provided in this embodiment of this application, "NMI" is a normalized mutual information indicator, "ACC" is a qualified indicator, and "ARI" is a clustering performance evaluation indicator. Through analysis of the three indicators, a clustering experiment is performed on common aggregation datasets CIFAR-10/100, STL-10, and ImageNET-10 by using the deep clustering method provided in this embodiment of this application. In this case, clustering effect obtained based on different numbers of initial classes such as $K_0 = 3$, $K_0 = 20$, **and** $K_0 = 30$ is consistent with a clustering effect obtained according to parametric clustering algorithms such as IDFD[32], CC [24], MiCE[34], and SCAN[35]. In addition, clustering effect of the deep clustering method provided in this embodiment of this application is much better than that of other non-parametric clustering algorithms such as AC[14], NMF[4], AE[3], and DAE[36].

FIG. 6a is a diagram of comparison between clustering effect according to a deep clustering method in an embodiment of this application and clustering effect according to a clustering algorithm in the conventional technology on Imagenet-50 dataset. As shown in FIG. 6a, a parametric clustering algorithm SCAN[35] in the conventional technology runs three times. When a number of initial classes is 50, an "NMI" normalized mutual information indicator is 79.7, an "ACC" accuracy indicator is 73.7, and an "ARI" clustering performance evaluation indicator is 61.8. When a number of initial classes is 10, an "NMI" normalized mutual information indicator is 60.6, an "ACC" accuracy indicator is 19.4, and an "ARI" clustering performance evaluation indicator is 23.0. It can be seen that indicators of clustering effect obtained according to the clustering algorithm SCAN[35] when the number of initial classes is 10 and not accurate are poor and unstable. Similarly, when the number of initial classes is 10 and not accurate, other clustering algorithms in the conventional technology, such as DBSCAN[12], moVB[18], DPM Sample[11], and DeepDPM[29], fail to provide satisfactory clustering effect. However, in the deep clustering method in this embodiment of this application, when a number of initial classes is 10, an output obtained through splitting training is that a number of classes is 50.6, an "NMI" normalized mutual information indicator is 80.1, an "ACC" accuracy indicator is 73.7, and an "ARI" clustering performance evaluation indicator is 62.3. In view of this, it can be determined that an accurate clustering result can be obtained by using the deep clustering method in this embodiment of this application without knowing an accurate number of classes.

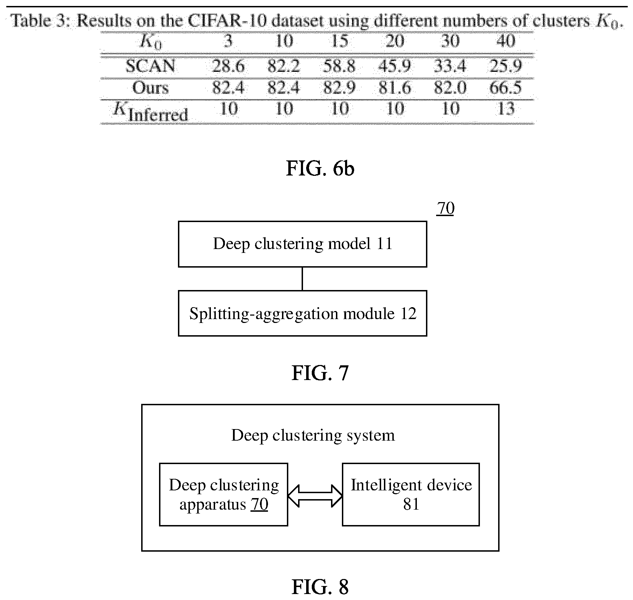

FIG. 6b is a diagram of comparison between clustering effect according to a deep clustering method in an embodiment of this application and clustering effect according to a SCAN algorithm on a CIFAR-10 dataset. As shown in FIG. 6b, a number of initial classes is 3, 10, 15, 20, 30, or 40. In this case, the SCAN algorithm provides a high clustering accuracy rate when the number of initial classes is 10 and more accurate, but provides a low clustering accuracy rate when the number of initial classes is not accurate. This indicates unstable performance. However, the deep clustering method in this embodiment of this application can provide a high clustering accuracy rate and stable performance despite of a number of initial classes.

FIG. 7 shows a deep clustering apparatus according to an embodiment of this application. The apparatus performs the deep clustering method according to any one of the foregoing embodiments. As shown in FIG. 7, the deep clustering apparatus 70 includes: a first deep clustering model 11, configured to output one or more first classes output by one or more first neurons, where an output layer of the first deep clustering model includes the one or more first neurons, and the one or more first neurons are configured to output one or more first classes of raw data; and a splitting-aggregation module 12, configured to: when a similarity between at least two pieces of data corresponding to a target class meets a splitting condition, split a target neuron at the output layer of the first deep clustering model, to obtain a second deep clustering model, where the target class is at least one of the one or more first classes, data corresponding to the target class includes a plurality of pieces of data, the target neuron is a first neuron that outputs the target class in the one or more first neurons, an output layer of the second deep clustering model includes a plurality of second neurons, the plurality of second neurons are neurons obtained by splitting the target neuron, and the second neuron is configured to output a second class.

The deep clustering apparatus 70 may be implemented by software, or may be implemented by hardware. For example, the following describes an implementation of the deep clustering apparatus 70. A module is used as an example of a software functional unit. In this case, the deep clustering apparatus 70 may include code running on a computing instance. The computing instance may be at least one of computing devices such as a physical host (computing device), a virtual machine, and a container. Further, there may be one or more computing devices. For example, the deep clustering apparatus 70 may include code running on a plurality of hosts/virtual machines/containers. It should be noted that the plurality of hosts/virtual machines/containers used to run the application may be distributed in a same region, or may be distributed in different regions. The plurality of hosts/virtual machines/containers used to run the code may be distributed in a same AZ, or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same VPC, or may be distributed in a plurality of VPCs. Generally, one VPC is set in one region. A communication gateway should be configured in each VPC to implement communication between two VPCs in a same region or between VPCs in different regions.

A module is used as an example of a hardware functional unit. In this case, the deep clustering apparatus 70 may include at least one computing device, for example, a server. Alternatively, the deep clustering apparatus 70 may be a device or the like that is implemented by an ASIC or a PLD. The PLD may be implemented by a CPLD, an FPGA, a GAL, or any combination thereof.

A plurality of computing devices included in the deep clustering apparatus 70 may be distributed in a same region, or may be distributed in different regions. A plurality of computing devices included in the deep clustering apparatus 70 may be distributed in a same AZ, or may be distributed in different AZs. Similarly, a plurality of computing devices included in the deep clustering apparatus 70 may be distributed in a same VPC, or may be distributed in a plurality of VPCs. The plurality of computing devices may be any combination of computing devices such as a server, an ASIC, a PLD, a CPLD, an FPGA, and a GAL.

FIG. 8 is a diagram of a deep clustering system according to an embodiment of this application. As shown in FIG. 8, the system includes at least one deep clustering apparatus 70 and an intelligent device 81.

The intelligent device 81 is configured to collect a picture, a voice, a text, a medical image, or video data.

In some embodiments, the intelligent device 81 is provided with a picture, voice, medical image, or video collection apparatus, and may input collected picture, voice, medical image, or video data into the deep clustering apparatus 70.

The intelligent device 81 may be connected to the deep clustering apparatus 70 through the internet. The intelligent device 81 may include an intelligent device that can output a medical image, a voice, a video, or a picture, for example, a magnetic resonance imager, a smart speaker, a smart camera, or a smartphone.

The deep clustering apparatus 70 is configured to: perform the deep clustering method described in any one of the foregoing embodiments; cluster the picture, the voice, the text, the medical image, or the video data collected by the intelligent device 81; and complete actual tasks such as pattern recognition and data mining.

Both the deep clustering apparatus 70 and the intelligent device 81 may be implemented by software, or may be implemented by hardware.

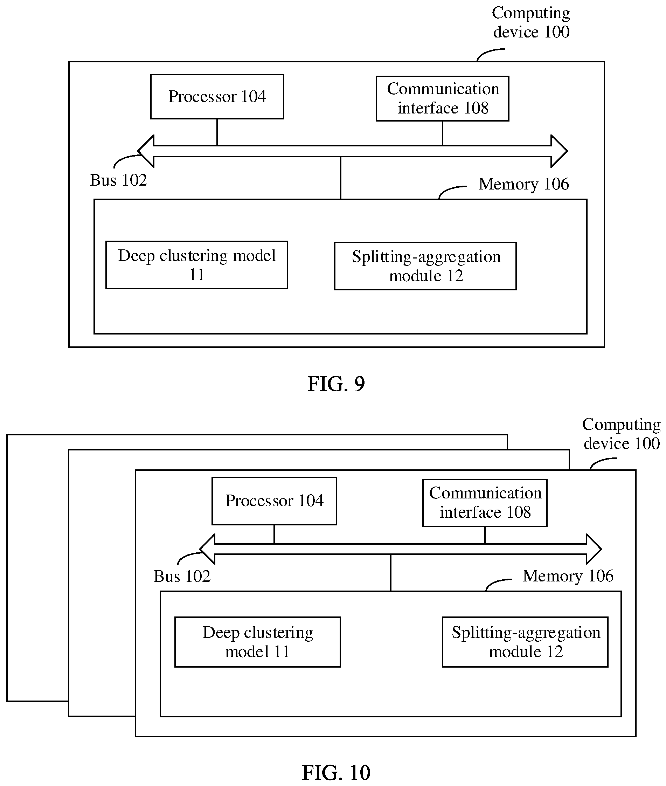

FIG. 9 is a diagram of a computing device according to an embodiment of this application. As shown in FIG. 9, the computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that numbers of processors and memories in the computing device 100 are not limited in this application.

The bus 102 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used to represent the bus in FIG. 9, but this does not mean that there is only one bus or only one type of bus. The bus 102 may include a path for transmitting information between components (for example, the memory 106, the processor 104, and the communication interface 108) of the computing device 100.

The processor 104 may include any one or more of processors such as a central processing unit (central processing unit, CPU), a graphics processing unit (graphics processing unit, GPU), a micro processor (micro processor, MP), or a digital signal processor (digital signal processor, DSP).

The memory 106 may include a volatile memory (volatile memory), for example, a random access memory (random access memory, RAM). The memory 106 may further include a non-volatile memory (non-volatile memory), for example, a read-only memory (read-only memory, ROM), a flash memory, a hard disk drive (hard disk drive, HDD), or a solid state drive (solid state drive, SSD).

The memory 106 stores executable program code, and the processor 104 executes the executable program code to separately implement functions of the deep clustering model 11 and the splitting-aggregation module 12. In other words, the memory 106 stores instructions used to perform the deep clustering method.

Alternatively, the memory 106 stores executable code, and the processor 104 executes the executable code to separately implement functions of the deep clustering apparatus 70, so as to implement the deep clustering method provided in embodiments of this application. In other words, the memory 106 stores instructions used to perform the deep clustering method provided in embodiments of this application.

The communication interface 108 implements communication between the computing device 100 and another device or a communication network by using a transceiver module, for example, but not limited to a network interface card or a transceiver.

FIG. 10 is a diagram of a computing device cluster according to an embodiment of this application. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 10, the computing device cluster includes at least one computing device 100. Memories 106 of one or more computing devices 100 in the computing device cluster may store a same instruction used to execute the deep clustering method provided in embodiments of this application.

In some possible implementations, memories 106 of one or more computing devices 100 in the computing device cluster may alternatively store some instructions used to execute the deep clustering method provided in embodiments of this application. In other words, a combination of one or more computing devices 100 may jointly execute instructions used to execute the deep clustering method provided in embodiments of this application.

It should be noted that memories 106 of different computing devices 100 in the computing device cluster may store different instructions that are respectively used to execute some functions of the deep clustering apparatus 70. In other words, the instructions stored in the memories 106 of the different computing devices 100 may implement functions of one or more modules in the deep clustering model 11 and the splitting-aggregation module 12.

In some possible implementations, the one or more computing devices in the computing device cluster may be connected through a network. The network may be a wide area network, a local area network, or the like.

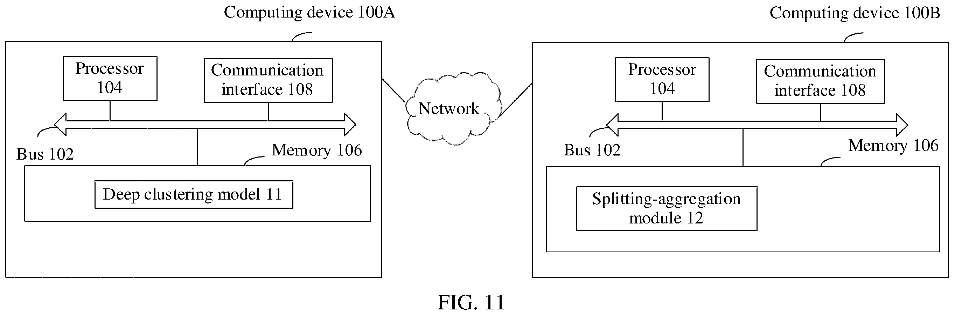

FIG. 11 is a diagram of a possible implementation of a computing device cluster according to this application. As shown in FIG. 11, two computing devices 100A and 100B are connected through a network. Specifically, each computing device is connected to the network through a communication interface of the computing device. In this possible implementation, a memory 106 of the computing device 100A stores instructions used to execute a function of a deep clustering model 11. In addition, a memory 106 of the computing device 100B stores instructions used to execute a function of a splitting-aggregation module 12.

A manner of connection between the computing device cluster shown in FIG. 11 may be as follows: According to the deep clustering method provided in this application, a large number of data needs to be stored, and a model needs to be established and optimized. In view of this, a function implemented by the deep clustering model 11 is considered to be performed by the computing device 100A.

It should be understood that functions of the computing device 100A shown in FIG. 11 may also be completed by a plurality of computing devices 100. Similarly, functions of the computing device 100B may also be completed by a plurality of computing devices 100.

An embodiment of this application further provides another computing device cluster. For a relationship of connection between computing devices in the computing device cluster, refer to the manner of connection between the computing device cluster in FIG. 11. A difference lies in that memories 106 of one or more computing devices 100 in the computing device cluster may store a same instruction used to perform the deep clustering method.

In some possible implementations, memories 106 of one or more computing devices 100 in the computing device cluster may alternatively store some instructions used to execute the deep clustering method. In other words, a combination of one or more computing devices 100 may jointly execute instructions used to execute the deep clustering method.

It should be noted that memories 106 of different computing devices 100 in the computing device cluster may store different instructions that are respectively used to execute some functions of a deep clustering system. In other words, the instructions stored in the memories 106 of the different computing devices 100 may implement functions of one or more apparatuses in the deep clustering apparatus 70.

An embodiment of this application further provides a computer program product including instructions. The computer program product may be a software or program product that includes instructions and that can run on a computing device or be stored in any usable medium. When the computer program product runs on at least one computing device, the at least one computing device is enabled to perform a deep clustering method.

An embodiment of this application further provides a computer-readable storage medium. The computer-readable storage medium may be any usable medium that can be stored by a computing device, or a data storage device, for example, a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. The instructions instruct the computing device to perform a deep clustering method.

**Embodiment 1**

Embodiment 1 of this application provides a deep clustering method. An output layer of a first deep clustering model includes a plurality of first neurons, and the plurality of first neurons are configured to output a plurality of first classes of raw data. The method includes: obtaining the plurality of first classes output by the plurality of first neurons; and when a similarity between data corresponding to a plurality of target classes meets an aggregation condition, aggregating a plurality of target neurons at the output layer of the first deep clustering model, to obtain a second deep clustering model, where the plurality of target classes are at least two of the plurality of first classes, the target neurons are first neurons that output the target classes in the plurality of first neurons, an output layer of the second deep clustering model includes a plurality of second neurons, the second neurons are neurons obtained by aggregating the target neurons, and the second neuron is configured to output a second class.

In some embodiments, when the similarity between the data corresponding to the plurality of target classes does not meet the aggregation condition, the method further includes: when a similarity between at least two pieces of data corresponding to any target class meets a splitting condition, splitting a target neuron at the output layer of the first deep clustering model, to obtain a third deep clustering model, where data corresponding to the target class includes a plurality of pieces of data, the target neuron is a first neuron that outputs the target class in one or more first neurons, an output layer of the third deep clustering model includes one or more third neurons, the one or more third neurons are neurons obtained by splitting the target neuron, and the third neuron is configured to output a third class.

Embodiment 1 of this application provides another deep clustering apparatus, including: a deep clustering model 11, configured to output one or more first classes output by one or more first neurons, where an output layer of the first deep clustering model includes the one or more first neurons, and the one or more first neurons are configured to output one or more first classes of raw data; and an aggregation module 73, configured to: when a similarity between data corresponding to a plurality of target classes meets an aggregation condition, aggregate a plurality of target neurons at the output layer of the first deep clustering model, to obtain a second deep clustering model, where the plurality of target classes are at least two of the plurality of first classes, the target neurons are first neurons that output the target classes in the plurality of first neurons, an output layer of the second deep clustering model includes a plurality of second neurons, the second neurons are neurons obtained by aggregating the target neurons, and the second neuron is configured to output a second class.

It may be understood that the processor in embodiments of the deep clustering method provided in embodiments of this application may be a central processing unit (central processing unit, CPU), or may be another general-purpose processor, a digital signal processor (digital signal processor, DSP), an application-specific integrated circuit (application-specific integrated circuit, an ASIC), a field programmable gate array (field programmable gate array, FPGA), another programmable logic device, a transistor logic device, a hardware component, or any combination thereof. The general-purpose processor may be a microprocessor or any regular processor.

The method steps in embodiments of the deep clustering method provided in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk, a CD-ROM, or any other form of storage medium well-known in the art. For example, a storage medium is coupled to a processor, so that the processor can read information from the storage medium or write information into the storage medium. Certainly, the storage medium may be a component of the processor. The processor and the storage medium may be disposed in an ASIC.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions in embodiments of the deep clustering method provided in embodiments of this application are all or partially generated. The computer may be a general-purpose computer, a dedicated computer, a computer network, or other programmable apparatuses. The computer instruction may be stored in a computer-readable storage medium, or may be transmitted by using the computer-readable storage medium. The computer instruction may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

It may be understood that various numeric numbers in embodiments of the deep clustering method provided in embodiments of this application are merely used for differentiation for ease of description, and are not intended to limit a scope of embodiments of the deep clustering method provided in embodiments of this application.

**Claims**

1. A deep clustering method, wherein an output layer of a first deep clustering model comprises one or more first neurons, and the one or more first neurons are configured to output one or more first classes of raw data; and the method comprises:

   obtaining the one or more first classes output by the one or more first neurons; and
   when a similarity between at least two pieces of data corresponding to a first target class meets a splitting condition, splitting a target neuron at the output layer of the first deep clustering model, to obtain a second deep clustering model, wherein the first target class is at least one of the one or more first classes, data corresponding to the first target class comprises a plurality of pieces of data, the target neuron is a first neuron that outputs the first target class in the one or more first neurons, an output layer of the second deep clustering model comprises a plurality of second neurons, and the second neuron is configured to output a second class.

2. The method according to claim 1, wherein a number of one or more first classes output by the first neuron is preset.

3. The method according to claim 1, wherein the raw data comprises picture data, text data, voice data, a medical image, or video data.

4. The method according to any one of claims 1 to 3, wherein the similarity between the at least two pieces of data corresponding to the first target class is obtained by using the following steps:

   determining probability distributions of the at least two pieces of data corresponding to the first target class; and
   obtaining, based on a similarity between the probability distributions of the at least two pieces of data corresponding to the first target class, the similarity between the at least two pieces of data corresponding to the first target class.

5. The method according to any one of claims 1 to 4, wherein the splitting condition comprises:

   a first JS divergence is greater than a splitting threshold, wherein the first JS divergence indicates the similarity between the at least two pieces of data corresponding to the first target class.

6. The method according to claim 5, wherein the splitting threshold is $T_S$ :

$$T_s = \frac{\lambda}{2K(\lambda + K + 1)} \sum_{k_1, k_2 \in [K]} JS\left(k_1 \| k_2\right),$$

   wherein
   $k_1$ and $k_2$ are two first classes different from the target class in the plurality of first classes, $JS(k_1 \| k_2)$ is a JS divergence value between $k_1$ and $k_2$, $\lambda$ is a balance parameter, and $K$ is a number of first classes.

7. The method according to any one of claims 1 to 6, wherein each of weights of the plurality of second neurons at the output layer of the second deep clustering model is a superposition value of a weight of the target neuron and Gaussian noise.

8. The method according to any one of claims 1 to 7, wherein the method comprises: training the second deep clustering model:

EP 4 575 908 A1

using the raw data and a number of second classes as an input of the second deep clustering model; and with convergence of a first loss function as a target, optimizing and updating the plurality of weights of the plurality of second neurons at the output layer of the second deep clustering model in a training process, to obtain a trained second deep clustering model.

9. The method according to any one of claims 1 to 8, wherein the second class of the raw data is output by using the trained second deep clustering model.

10. The method according to any one of claims 1 to 9, wherein when the similarity between the at least two pieces of data corresponding to the first target class fails to meet the splitting condition, the method further comprises:
when a similarity between the data corresponding to the first target class and data corresponding to a second target class meets an aggregation condition, aggregating a plurality of target neurons at the output layer of the first deep clustering model, to obtain a third deep clustering model, wherein the second target class is at least one of the one or more first classes, the plurality of target neurons are a plurality of first neurons that output the first target class and the second target class in the one or more first neurons, an output layer of the third deep clustering model comprises one or more third neurons, the one or more third neurons are neurons obtained by aggregating the plurality of target neurons, and the third neuron is configured to output a third class.

11. The method according to claim 10, wherein the aggregation condition comprises:
a second JS divergence is less than an aggregation threshold, wherein the second JS divergence indicates the similarity between the data corresponding to the first target class and the data corresponding to the second target class.

12. A deep clustering method, wherein an output layer of a first deep clustering model comprises a plurality of first neurons, and the plurality of first neurons are configured to output a plurality of first classes of raw data; and the method comprises:

obtaining the plurality of first classes output by the plurality of first neurons; and
when a similarity between data corresponding to a plurality of target classes meets an aggregation condition, aggregating a plurality of target neurons at the output layer of the first deep clustering model, to obtain a second deep clustering model, wherein the plurality of target classes are at least two of the plurality of first classes, the target neurons are first neurons that output the target classes in the plurality of first neurons, an output layer of the second deep clustering model comprises a plurality of second neurons, the second neurons are neurons obtained by aggregating the target neurons, and the second neuron is configured to output a second class.

13. The method according to claim 12, wherein when the similarity between the data corresponding to the plurality of target classes does not meet the aggregation condition, the method further comprises:
when a similarity between at least two pieces of data corresponding to any target class meets a splitting condition, splitting a target neuron at the output layer of the first deep clustering model, to obtain a third deep clustering model, wherein data corresponding to the target class comprises a plurality of pieces of data, the target neuron is a first neuron that outputs the target class in one or more first neurons, an output layer of the third deep clustering model comprises one or more third neurons, the one or more third neurons are neurons obtained by splitting the target neuron, and the third neuron is configured to output a third class.

14. A deep clustering apparatus, configured to perform the method according to any one of claims 1 to 11, and comprising:

a first deep clustering model, configured to output the one or more first classes output by the one or more first neurons, wherein an output layer of the first deep clustering model comprises the one or more first neurons, and the one or more first neurons are configured to output one or more first classes of raw data; and
a splitting-aggregation module, configured to: when a similarity between at least two pieces of data corresponding to a target class meets a splitting condition, split a target neuron at the output layer of the first deep clustering model, to obtain a second deep clustering model, wherein the target class is at least one of the one or more first classes, data corresponding to the target class comprises a plurality of pieces of data, the target neuron is a first neuron that outputs the target class in the one or more first neurons, an output layer of the second deep clustering model comprises a plurality of second neurons, the plurality of second neurons are neurons obtained by splitting the target neuron, and the second neuron is configured to output a second class.

15. A deep clustering system, wherein the system comprises:

an intelligent device, configured to collect picture data, text data, voice data, a medical image, or video data; and
a deep clustering apparatus, configured to perform the method according to any one of claims 1 to 11 or the method according to claim 12 or 13, to cluster the picture data, the text data, the voice data, the medical image, or the video data.

16. A computing device, wherein the computing device comprises a processor and a memory; and
the processor is configured to execute instructions stored in the memory, to enable the computing device to perform the method according to any one of claims 1 to 11 or the method according to claim 12 or 13.

17. A computing device cluster, comprising a plurality of computing devices, wherein each computing device comprises a processor and a memory; and
the processors of the plurality of computing devices are configured to execute instructions stored in the memories of the plurality of computing devices, to enable one computing device in the computing device cluster to perform the method according to any one of claims 1 to 11 or the method according to claim 12 or 13.

18. A computer program product comprising instructions, wherein when the instructions are run by a computing device cluster, the computing device cluster is enabled to perform the method according to any one of claims 1 to 11 or the method according to claim 12 or 13.

19. A computer-readable storage medium, comprising computer program instructions, wherein when the computer program instructions are executed by a computing device, the computing device performs the method according to any one of claims 1 to 11 or the method according to claim 12 or 13.

FIG. 1

FIG. 2

FIG. 3

| Obtain one or more first classes output by one or more first neurons | S21 |

| When a splitting condition is met, split a target neuron at an output layer of a first deep clustering model, to obtain a second deep clustering model | S22 |

FIG. 4

Table 1: Comparison with state-of-the-art methods. $K_0$ denotes the initial number of clusters.

| Method | CIFAR-10 | | | CIFAR-100 | | | STL-10 | | | ImageNet-10 | | |
|---|---|---|---|---|---|---|---|---|---|---|---|---|
| Metric | NMI | ACC | ARI | NMI | ACC | ARI | NMI | ACC | ARI | NMI | ACC | ARI |
| AC [14] | 10.5 | 22.8 | 6.5 | 9.8 | 13.8 | 3.4 | 23.9 | 33.2 | 14.0 | 13.8 | 24.2 | 6.7 |
| NMF [4] | 8.1 | 19.0 | 3.4 | 7.9 | 11.8 | 2.6 | 9.6 | 18.0 | 4.6 | 13.2 | 23.0 | 6.5 |
| AE [3] | 23.9 | 31.4 | 16.9 | 10.0 | 16.5 | 4.8 | 25.0 | 30.3 | 16.1 | 21.0 | 31.7 | 15.2 |
| DAE [36] | 25.1 | 29.7 | 16.3 | 11.1 | 15.1 | 4.6 | 22.4 | 30.2 | 15.2 | 20.6 | 30.4 | 13.8 |
| DCGAN [27] | 26.5 | 31.5 | 17.6 | 12.0 | 15.1 | 4.5 | 21.0 | 29.8 | 13.9 | 22.5 | 34.6 | 15.7 |
| DeCNN [43] | 24.0 | 28.2 | 17.4 | 9.2 | 13.3 | 3.8 | 22.7 | 29.9 | 16.2 | 18.6 | 31.3 | 14.2 |
| VAE [21] | 24.5 | 29.1 | 16.7 | 10.8 | 15.2 | 4.0 | 20.0 | 28.2 | 14.6 | 19.3 | 33.4 | 16.8 |
| JULE [42] | 19.2 | 27.2 | 13.8 | 10.3 | 13.7 | 3.3 | 18.2 | 27.7 | 16.4 | 17.5 | 30.0 | 13.8 |
| DEC [40] | 25.7 | 30.1 | 16.1 | 13.6 | 18.5 | 5.0 | 27.6 | 35.9 | 18.6 | 28.2 | 38.1 | 20.3 |
| DAC [6] | 39.6 | 52.2 | 30.6 | 18.5 | 23.8 | 8.8 | 36.6 | 47.0 | 25.7 | 39.4 | 52.7 | 30.2 |
| ADC [16] | - | 32.5 | - | - | 16.0 | - | - | 53.0 | - | - | - | - |
| DDC [5] | 42.4 | 52.4 | 32.9 | - | - | - | 37.1 | 48.9 | 26.7 | 43.3 | 57.7 | 34.5 |
| DCCM [39] | 49.6 | 62.3 | 40.8 | 28.5 | 32.7 | 17.3 | 37.6 | 48.2 | 26.2 | 60.8 | 71.0 | 55.5 |
| IIC [19] | 51.3 | 61.7 | 41.1 | - | 25.7 | - | 43.1 | 49.9 | 29.5 | - | - | - |
| MMDC [31] | 57.2 | 70.0 | - | 25.9 | 31.2 | - | 49.8 | 61.1 | - | 71.9 | 81.1 | - |
| PICA [17] | 56.1 | 64.5 | 46.7 | 29.6 | 32.2 | 15.9 | - | - | - | 78.2 | 85.0 | 73.3 |
| DCCS [45] | 56.9 | 65.6 | 46.9 | - | - | - | 37.6 | 48.2 | 26.2 | 60.8 | 71.0 | 55.5 |
| DHOG [9] | 58.5 | 66.6 | 49.2 | 25.8 | 26.1 | 11.8 | 41.3 | 48.3 | 27.2 | - | - | - |
| GATCluster [26] | 47.5 | 61.0 | 40.2 | 21.5 | 28.1 | 11.6 | 44.6 | 58.3 | 36.3 | 59.4 | 73.9 | 55.2 |
| IDFD [32] | 71.4 | 81.5 | 66.3 | 42.6 | 42.5 | 26.4 | 64.3 | 75.6 | 57.5 | 89.8 | 95.4 | 90.1 |
| CC [24] | 70.5 | 79.0 | 63.7 | 43.1 | 42.9 | 26.6 | 76.4 | 85.0 | 72.6 | 85.9 | 89.3 | 82.2 |
| MiCE [34] | 73.7 | 83.5 | 69.8 | 43.6 | 44.0 | 28.0 | 63.5 | 75.2 | 57.5 | - | - | - |
| SCAN [35] | 71.2 | 81.8 | 66.5 | 44.1 | 42.2 | 26.7 | 65.4 | 75.5 | 59.0 | 86.2 | 92.0 | 83.3 |
| Ours ($K_0$=3) | 71.9 | 82.4 | 67.5 | 45.2 | 43.8 | 28.1 | 64.3 | 74.5 | 57.6 | 88.6 | 91.2 | 87.1 |
| Ours ($K_0$=20) | 71.1 | 81.6 | 66.2 | - | - | - | 65.1 | 74.7 | 58.9 | 86.9 | 91.8 | 84.7 |
| Ours ($K_0$=30) | - | - | - | 44.9 | 43.1 | 27.8 | - | - | - | - | - | - |

FIG. 5

Table 2: Comparison with state-of-the-art methods (3 runs) on the ImageNet-50 dataset.

| | Init k | Inferred k | ACC | MNI | ARI |
|---|---|---|---|---|---|
| SCAN [35] | 50 | - | 73.7±1.7 | 79.7±0.6 | 61.8±1.3 |
| SCAN [35] | 10 | - | 19.4±0.1 | 60.6±0.4 | 23.0±0.3 |
| DBSCAN [12] | - | 16.0 | 24.0±0.0 | 52.0±0.0 | 9.0±0.0 |
| moVB [18] | - | 46.2±1.3 | 55.0±2.0 | 70.0±1.0 | 43.0±1.0 |
| DPM Sampler [11] | - | 72.0±2.6 | 57.0±1.0 | 72.0±0.0 | 43.0±1.0 |
| DeepDPM [29] | 10 | 55.3±1.5 | 66.0±1.0 | 77.0±0.0 | 54.0±1.0 |
| Ours | 10 | 50.6±1.7 | 73.3±1.3 | 80.1±0.7 | 62.3±1.5 |

FIG. 6a

Table 3: Results on the CIFAR-10 dataset using different numbers of clusters $K_0$.

| $K_0$ | 3 | 10 | 15 | 20 | 30 | 40 |
|---|---|---|---|---|---|---|
| SCAN | 28.6 | 82.2 | 58.8 | 45.9 | 33.4 | 25.9 |
| Ours | 82.4 | 82.4 | 82.9 | 81.6 | 82.0 | 66.5 |
| $K_{Inferred}$ | 10 | 10 | 10 | 10 | 10 | 13 |

FIG. 6b

70

| Deep clustering model 11 |
|---|

| Splitting-aggregation module 12 |
|---|

FIG. 7

Deep clustering system

| Deep clustering apparatus 70 | ⟷ | Intelligent device 81 |
|---|---|---|

FIG. 8

Computing
device 100

```
┌──────────────────────────────────────────────────────────────┐
│   ┌─────────────────────┐      ┌─────────────────────┐        │
│   │   Processor 104     │      │   Communication     │        │
│   │                     │      │   interface 108     │        │
│   └─────────────────────┘      └─────────────────────┘        │
│            ◁══════════════════════════════════════▷           │
│   Bus 102                                  Memory 106         │
│   ┌────────────────────────────────────────────────────────┐ │
│   │  ┌────────────────────┐    ┌────────────────────────┐   │ │
│   │  │ Deep clustering model │  │  Splitting-aggregation │   │ │
│   │  │        11          │    │      module 12         │   │ │
│   │  └────────────────────┘    └────────────────────────┘   │ │
│   └────────────────────────────────────────────────────────┘ │
└──────────────────────────────────────────────────────────────┘
```

FIG. 9

Computing
device 100

```
┌──────────────────────────────────────────────────────────────┐
│ ┌──────────────────────────────────────────────────────────┐ │
│ │ ┌──────────────────────────────────────────────────────┐ │ │
│ │ │  ┌───────────────────┐    ┌─────────────────────┐     │ │ │
│ │ │  │  Processor 104    │    │   Communication     │     │ │ │
│ │ │  │                   │    │   interface 108     │     │ │ │
│ │ │  └───────────────────┘    └─────────────────────┘     │ │ │
│ │ │          ◁══════════════════════════════════════▷     │ │ │
│ │ │  Bus 102                            Memory 106        │ │ │
│ │ │  ┌────────────────────────────────────────────────┐  │ │ │
│ │ │  │ ┌────────────────┐     ┌─────────────────────┐ │  │ │ │
│ │ │  │ │ Deep clustering │    │ Splitting-aggregation│ │  │ │ │
│ │ │  │ │   model 11      │    │     module 12       │ │  │ │ │
│ │ │  │ └────────────────┘     └─────────────────────┘ │  │ │ │
│ │ │  └────────────────────────────────────────────────┘  │ │ │
│ │ └──────────────────────────────────────────────────────┘ │ │
│ └──────────────────────────────────────────────────────────┘ │
└──────────────────────────────────────────────────────────────┘
```

FIG. 10

Computing device 100A

Computing device 100B

Processor 104

Communication interface 108

Bus 102

Memory 106

Deep clustering model 11

Network

Processor 104

Communication interface 108

Bus 102

Memory 106

Splitting-aggregation module 12

FIG. 11

EP 4 575 908 A1

## INTERNATIONAL SEARCH REPORT

| International application No. |
|---|
| **PCT/CN2023/102730** |

**A.    CLASSIFICATION OF SUBJECT MATTER**

G06N 3/08(2023.01)i

According to International Patent Classification (IPC) or to both national classification and IPC

**B.    FIELDS SEARCHED**

Minimum documentation searched (classification system followed by classification symbols)

IPC: G06N, G06F, G06K

Documentation searched other than minimum documentation to the extent that such documents are included in the fields searched

Electronic data base consulted during the international search (name of data base and, where practicable, search terms used)

DWPI, CNABS, WPABS, CNTXT, ENTXT, ENTXTC, USTXT, CNKI, CJFD: 深度, 聚类, 深度聚类, 模型, 分类, 神经元, 学习, 机器学习, 无监督, 有监督, 输出, 散度, 交叉熵, 概率, 阈值, 相似度, 参数, 权重, 高斯噪声, JD, Jensen, shannon, depth, clustering, deep clustering, model, classification, neuron, learning, machine learning, unsupervised, supervised, output, divergence, cross-entropy, probability, threshold, similarity, parameter, weight, Gaussian noise

**C.    DOCUMENTS CONSIDERED TO BE RELEVANT**

| Category* | Citation of document, with indication, where appropriate, of the relevant passages | Relevant to claim No. |
|---|---|---|
| X | CN 111860556 A (CHINA MOBILE (SUZHOU) SOFTWARE TECHNOLOGY CO., LTD.; CHINA MOBILE COMMUNICATIONS GROUP CO., LTD.) 30 October 2020 (2020-10-30) description, paragraphs 100-262 | 1-4, 12, 14-19 |
| A | CN 114743037 A (SOUTH CHINA AGRICULTURAL UNIVERSITY) 12 July 2022 (2022-07-12) entire document | 1-19 |
| A | CN 113157957 A (BEIJING UNIVERSITY OF TECHNOLOGY) 23 July 2021 (2021-07-23) entire document | 1-19 |
| A | WO 2017151759 A1 (THE UNITED STATES OF AMERICA, AS REPRESENTED BY THE SECRETARY, DEPARTMENT OF HEALTH AND HUMAN SERVICES) 08 September 2017 (2017-09-08) entire document | 1-19 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 October 2023** | **07 October 2023** |

| Name and mailing address of the ISA/CN | Authorized officer |
|---|---|
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/102730**

| Patent document cited in search report | | | Publication date (day/month/year) | Patent family member(s) | Publication date (day/month/year) |
|---|---|---|---|---|---|
| CN | 111860556 | A | 30 October 2020 | None | |
| CN | 114743037 | A | 12 July 2022 | None | |
| CN | 113157957 | A | 23 July 2021 | None | |
| WO | 2017151759 | A1 | 08 September 2017 | None | |

Form PCT/ISA/210 (patent family annex) (July 2022)

28

**EP 4 575 908 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211122497